# EUROPÄISCHE PATENTANMELDUNG

(11) **EP 2 527 734 A1**
(43) Veröffentlichungstag der Anmeldung: **28.11.2012**
(21) Anmeldenummer: 11167919.7
(22) Anmeldetag: 27.05.2011
(51) Int. Cl.: F23C 3/00, F23C 6/04

(54) **Industriebrenner mit geringer NOX-Emission**

(71) Anmelder: Elster GmbH, 55252 Mainz-Kastel (DE)
(72) Erfinder: Gitzinger, Heinz-Peter, 41469 Neuss (DE)
(74) Vertreter: Zenz

(57) **Zusammenfassung**

Bei einem Industriebrenner einer Thermoprozessanlage zur direkten oder indirekten Beheizung eines Ofenraumes, der eine Brennkammer (4) mit wenigstens einer in einem Heizraum (3) mündenden Öffnung (5), durch die im Betrieb des Industriebrenners ein Stoffstrom (22) aus der Brennkammer (4) in den Heizraum (3) gelangt, eine Brennluftzuführleitung (6), eine erste Brennstoffzuführung (9), die wenigstens eine in der Brennkammer (4) mündende Zuführöffnung (10) aufweist, eine zweite Brennstoffzuführung (11), die zumindest abschnittsweise innerhalb des Industriebrenners verläuft, und eine die Zuführung von Brennstoff (13) steuernde Steuervorrichtung (20) umfasst, durch die der Industriebrenner in wenigstens zwei Betriebsarten betreibbar ist, soll eine Lösung geschaffen werden, die auf konstruktiv einfache Weise und kostengünstig einen verbesserten Industriebrenner bereitstellt, der für unterschiedliche Betriebsarten eine stabile Verbrennung mit geringsten NOx-Emissionen ermöglicht. Dies wird dadurch erreicht, dass die zweite Brennstoffzuführung (11) außerhalb der Brennkammer (4) verläuft und wenigstens eine in den Heizraum (3) mündende Auslassöffnung (12) aufweist, die zu der wenigstens einen Öffnung (5) der Brennkammer (4) mit Bezug auf die Längsachse (X) des Industriebrenners radial nach außen hin versetzt angeordnet ist und durch die Brennstoff (13) separat von dem aus der Brennkammer (4) austretenden Stoffstrom (22) dem Heizraum (3) zuführbar ist, wobei im Betrieb des Industriebrenners mit Hilfe der Steuervorrichtung (20) beiden Brennstoffzuführungen (9, 11) jeweils separat oder gleichzeitig Brennstoff (13) zuführbar ist.

## Beschreibung

Die Erfindung richtet sich auf einen Industriebrenner einer Thermoprozessanlage zur direkten oder indirekten Beheizung eines Ofenraumes, der eine Brennkammer mit wenigstens einer in einem Heizraum mündenden Öffnung, durch die im Betrieb des Industriebrenners ein Stoffstrom aus der Brennkammer in den Heizraum gelangt, eine erste Brennstoffzuführung, die wenigstens eine in der Brennkammer mündende Zuführöffnung aufweist, eine zweite Brennstoffzuführung, die zumindest abschnittsweise innerhalb des Industriebrenners verläuft, und eine die Zuführung von Brennstoff steuernde Steuervorrichtung umfasst, durch die der Industriebrenner in wenigstens zwei Betriebsarten betreibbar ist. Die Erfindung betrifft ferner ein Verfahren zum Betreiben eines solchen Industriebrenners, wobei im Betrieb des Industriebrenners dauerhaft Brennluft in die Brennkammer geführt wird und in einer ersten Betriebsart zum Anfahren des Industriebrenners ausschließlich von der ersten Brennstoffzuführung Brennstoff in die Brennkammer geführt wird, in welcher das Gemisch aus Brennstoff und Brennluft bei stabiler Flamme zumindest teilweise verbrannt wird, und wobei nach dem Anfahren des Industriebrenners in eine Folgebetriebsart gewechselt wird, bei welcher zumindest von der zweiten Brennstoffzuführung Brennstoff in den Heizraum geführt wird.

In vielen technischen Anwendungen, wie zum Beispiel im Bereich der Industrieöfen, bedarf es der Wärmeübertragung an ein zu behandelndes Gut. Die direkte oder indirekte Beheizung der Ofenanlage erfolgt dabei beispielsweise durch eine Vielzahl von Brennern bzw. Industriebrennern, die in der Wandung oder Decke des Ofenraumes angeordnet sind und einer Beheizung des Ofeninnenraumes dienen. Solche Industriebrenner umfassen eine eingebaute bzw. integrierte Brennkammer oder ein angebautes, als Brennkammer wirkendes Flammenrohr, nachfolgend vereinfachend nur Brennkammer genannt, und wandeln die Brennstoffenergie in Wärme um. Der Brennstoff und zumindest ein erster Teil der Brennluft werden in der meist aus keramischem Material hergestellten, hochhitzebeständigen Brennkammer miteinander vermischt und gezündet. Die entstehenden heißen Verbrennungsgase und ggf. der restliche Teil der Brennluft strömen durch düsenförmige Auslässe mit hoher Geschwindigkeit in den Heizraum, weshalb solche Industriebrenner auch als Impuls- oder Hochgeschwindigkeitsbrenner bezeichnet werden. Dabei ist der Heizraum entweder durch den Ofenraum selbst oder durch den Innenraum eines Strahlheizrohres gebildet. Ein solcher Industriebrenner, ausgeführt als Rekuperatorbrenner, ist beispielsweise aus der DE 40 26 605 A1 bekannt. Die mechanische Energie des aus der Brennkammer austretenden Flammenstrahls und der ggf. aus separaten Öffnungen oder Düsen austretende restliche Teil der Brennluft dienen zur Vermischung und Umwälzung der Abgase im Heizraum, was wiederum den Temperaturausgleich in gewünschter Weise fördert. Dieser bekannte Industriebrenner ist mit einem Rekuperator ausgestattet, wobei durch den Wärmeaustausch zwischen der zugeführten Brennluft und dem Abgasstrom des Brenners der Wirkungsgrad erhöht wird. Jedoch steigt mit zunehmender Erwärmung bzw. Vorwärmung der Brennluft die thermische NOx-Bildung.

Häufig verwendete Methoden zur Minderung der NOx-Emission sind bei bekannten Industriebrennern die Stufung von Brenngas oder Brennluft, wobei in der DE 40 26 605 A1 die Stufung der Brennluft durch Zugabe von zusätzlicher Brennluft um den aus der Brennkammer austretenden Stoffstrom herum zeichnerisch dargestellt ist. Die Stufung wird üblicherweise mittels verschiedenster Düsenformen und Düsenanordnungen für Brenngas oder Brennluft erreicht, wobei jedoch die erreichbare NOx-Minderung meist begrenzt ist. Dies liegt häufig daran, dass für eine wirkungsvolle NOx-Minderung vor der zweiten oder dritten Verbrennungsstufe, zumindest aber vor der letzten Stufe der Verbrennung eine wirkungsvolle Auskopplung von Wärme aus der Flammenzone erreicht werden müsste. Dies ist aber bei den erforderlichen kompakten Flammen von Industriebrennern kaum zu erreichen.

Eine andere Methode zur NOx-Minderung ist die Beimischung von Abgas aus dem Ofenraum in die Verbrennungszone. Dazu sind einzelne Düsen für Brennstoff und/oder Brennluft oder für das Gemisch aus Brennstoff und Brennluft erforderlich, die einen gewissen Abstand voneinander aufweisen. Ein Freistrahl von beispielsweise gasförmigem Brennstoff oder von Brennluft führt durch die Reibung der Brennstoff- oder Brennluftteilchen stets zum Mitreißen oder auch Ansaugen von Abgas aus der Umgebung des Freistrahls. Mit zunehmender Abgasbeimischung wird jedoch die Flammenstabilisierung beim Kaltstart des Brenners erschwert, so dass die Methode der Abgasbeimischung im Allgemeinen begrenzt eingesetzt wird.

Bei der Methode der sogenannten flammenlosen oder verdünnten Verbrennung wird dagegen eine sehr hohe Abgasbeimischung durch Heizraum-interne Rezirkulation des Abgases angestrebt und das Problem der Kaltstartfähigkeit durch eine zweite Betriebsart für den Kaltstart gelöst. Nachteilig bei der flammenlosen Verbrennung ist jedoch die erforderlich hohe Mindesttemperatur, die theoretisch die Selbstzündtemperatur des jeweiligen Brennstoffs in Brennluft oder im jeweiligen Gemisch ist. In der Praxis muss diese Selbstzündtemperatur in dem Gemisch aus meist kaltem Brenngas, vorgewärmter Brennluft und heißem Abgas deutlich überschritten werden, um eine stabile, pulsationsfreie Verbrennung ohne sichtbare Flamme sicher zu gewährleisten. Dies wird in der Praxis oft erst bei Heizraumtemperaturwerten von 850° erreicht. Zur Gewährleistung einer sicheren und stabilen Verbrennung, die unterhalb von 850°C mit Flamme und oberhalb von 850°C ohne Flamme erfolgt, sind eine Umschaltung der Brennerbetriebsart und dazu eine Heizraumtemperaturüberwachung mit entsprechender Brennersteuerung erforderlich.

Aus der EP 0 685 683 B1 ist ein Industriebrenner der eingangs genannten Art und ein Verfahren zum flammenlosen Betrieb eines solchen Brenners bekannt. Dieser Industriebrenner kann mit integrierter Wärmetauschvorrichtung als Rekuperatorbrenner oder Regeneratorbrenner ausgeführt sein, um das aus dem Heizraum in die Wärmetauschvorrichtung geführte Abgas durch Wärmeaustausch mit Brennluft abzukühlen. Ferner ist der aus der EP 0 685 683 B1 bekannte Industriebrenner in zwei Betriebsarten betreibbar, wobei zur Realisierung der zwei Betriebsarten zwei Brennstoffzuführungen vorgeschlagen werden, von denen eine bei einer ersten Betriebsart zum Anfahren des Industriebrenners bzw. beim Kaltstart Brennstoff in die Brennkammer zuführt und bei einer zweiten Betriebsart des Industriebrenners zur flammenlosen Verbrennung eine zweite Brennstoffzuführung Brennstoff direkt in den Heizraum zuführt. Dabei ist die zweite Brennstoffzuführung durch die Brennkammer und durch die düsenförmige Öffnung der Brennkammer hindurch geführt. Der hohen thermischen Beanspruchung dieser zweiten Brennstoffzuführung bei der ersten Betriebsart mit Flamme in der Brennkammer wird mittels einer Isolierung der zweiten Brennstoffzuführung oder mittels teurer Werkstoffe entgegengewirkt. Bei der zweiten Betriebsart der flammenlosen Verbrennung strömt der Brennstoff aus der zweiten Brennstoffzuführung umhüllt von der heißen Brennluft in den Heizraum. Die Beimischung von Abgas zu dem Gesamtstrahl aus Brennstoff und Brennluft findet in der zweiten Betriebsart am Strahlrand und damit nur in die Brennluft statt, da die zweite Brennstoffzuführung koaxial zur Öffnung der Brennkammer angeordnet ist, so dass der zugeführte Brennstoff von der dauerhaft aus der Brennkammer austretenden Brennluft umhüllt ist und somit eine direkte Einbringung von Abgas in den Brennstoff nicht möglich ist.

In der Praxis besteht bei dem bekannten Industriebrenner für einen mittleren Temperaturbereich darin ein Problem, dass aufgrund verbesserter Wärmerückgewinnung und damit schon hoher Luftvorwärmung bei Heizraumtemperaturen noch unterhalb der Selbstzündtemperatur schon recht hohe NOx-Emissionen im Flammenmodus gebildet werden, jedoch ein Umschalten zur flammenlosen Verbrennung aufgrund der noch nicht erreichten Selbstzündtemperator nicht möglich ist.

Der Erfindung liegt die Aufgabe zugrunde, bei einem Industriebrenner der eingangs bezeichneten Art eine Lösung zu schaffen, die auf konstruktiv einfache Weise und kostengünstig einen verbesserten Industriebrenner bereitstellt, der für unterschiedliche Betriebsarten eine stabile Verbrennung mit geringsten NOx-Emissionen ermöglicht. Insbesondere soll durch die Erfindung ein Verfahren zum Betreiben eines Industriebrenners und ein als Impulsbrenner ausgebildeter Industriebrenner bereitgestellt werden, bei dem die thermische NOx-Bildung sowohl oberhalb der Selbstzündtemperatur üblicher Brennstoffe bzw. Brenngase als auch unterhalb der Selbstzündtemperatur minimiert werden kann.

Bei einem Industriebrenner einer Thermoprozessanlage zur direkten oder indirekten Beheizung eines Heizraumes der Eingangs bezeichneten Art wird diese Aufgabe erfindungsgemäß dadurch gelöst, dass die zweite Brennstoffzuführung außerhalb der Brennkammer verläuft und wenigstens eine in den Heizraum mündende Auslassöffnung aufweist, die zu der wenigstens einen Öffnung der Brennkammer mit Bezug auf die Längsachse des Industriebrenners radial nach außen hin versetzt angeordnet ist und durch die Brennstoff separat von dem aus der Brennkammer austretenden Stoffstrom dem Heizraum zuführbar ist, wobei im Betrieb des Industriebrenners mit Hilfe der Steuervorrichtung beiden Brennstoffzuführungen jeweils separat oder gleichzeitig Brennstoff zuführbar ist. Die Steuervorrichtung sorgt somit dafür, dass entweder nur einer der beiden Brennstoffzuführungen separat oder beiden Brennstoffzuführungen gleichzeitig Brennstoff zugeführt werden kann.

Ebenso wird die vorstehende Aufgabe bei einem Verfahren zum Betreiben eines Industriebrenners der eingangs bezeichneten Art dadurch gelöst, dass in der Folgebetriebsart der von der zweiten Brennstoffzuführung geführte Brennstoff separat und beabstandet von dem aus der Brennkammer austretenden Stoffstrom dem Heizraum zugeführt wird, wobei in der Folgebetriebsart in dem Heizraum der aus der Brennkammer austretende Stoffstrom durch eine erste Injektorwirkung mit dem im Heizraum befindlichen Abgas und der aus der zweiten Brennstoffzuführung getrennt von dem Stoffstrom in den Heizraum austretende Brennstoff durch eine zweite Injektorwirkung mit dem im Heizraum befindlichen Abgas vermischt werden und anschließend der mit Abgas gemischte Brennstoff mit dem mit Abgas gemischten Stoffstrom verbrannt wird.

Vorteilhafte und zweckmäßige Ausgestaltungen und Weiterbildungen der Erfindung ergeben sich aus den Unteransprüchen.

Durch die Erfindung wird eine Möglichkeit bereitgestellt, mit welcher auf konstruktiv einfache Weise und kostengünstig ein Industriebrenner mit geringer NOx-Emission im Betrieb zur Verfügung steht. Die Ausführung des Industriebrenners mit zwei Brennstoffzuführungen erlaubt eine Verwendung des erfindungsgemäßen Industriebrenners für zumindest zwei Betriebsarten, wobei Ventilmittel zur Einstellung der jeweiligen Betriebsart dienen, die die Zufuhr von Brennstoff zur ersten und/oder zweiten Brennstoffzuführung sowie die zugeführte Menge von Brennstoff regulieren. Durch das Vorhandensein einer zweiten Brennstoffzuführung ist nach der Startphase des Brenners bei angestiegener Heizraumtemperatur die Möglichkeit gegeben, den Industriebrenner entweder in einer Betriebsart mit Brennstoffstufung und mit Flamme in beiden Stufen der Verbrennung oder in einer Betriebsart mit flammenloser Verbrennung zu betreiben. Die separate Zufuhr von Brennstoff über die zweite Brennstoffzuführung ermöglicht im Gegensatz zu bekannten Industriebrennern der eingangs bezeichneten Art eine Vermischung des Brennstoffes mit Abgas aus dem Heizraum, was zu einer Verringerung der NOx-Emissionen sowohl in der Betriebsart der Brennstoffstufung als auch in der Betriebsart der flammenlosen Verbrennung beiträgt. Aufgrund dessen, dass die zweite Brennstoffzuführung den Brennstoff separat in den Heizraum führt, findet durch Injektorwirkung eine Vermischung des Brennstoffs mit Abgas statt. Gleichzeitig vermischt sich der aus der Brennkammer austretende Stoffstrom, der separat von dem Brennstoff der zweiten Brennstoffzuführung in den Heizraum gelangt, durch Injektorwirkung mit Abgas aus dem Heizraum. Anschließend erfolgt dann die Verbrennung bzw. Reaktion der beiden gemischten Ströme unter Bildung einer Flamme im Heizraum, was zu einer Minderung der NOx-Emission führt.

Zur Erzielung von geringen NOx-Emissionen im Betrieb des Industriebrenners ist es von Vorteil, wenn die erste und zweite Brennstoffzuführung in Abhängigkeit einer Betriebsart des Industriebrenners Brennstoff führen, d.h. ob und wieviel Brennstoff von einer der beiden Brennstoffzuführungen geführt wird, ist von der Betriebsart des Industriebrenners abhängig und wird von geeigneten Mitteln gesteuert bzw. geregelt.

In Ausgestaltung des erfindungsgemäßen Industriebrenners ist dementsprechend vorgesehen, dass die Steuervorrichtung die Zuführung von Brennstoff zu der ersten Brennstoffzuführung und zu der zweiten Brennstoffzuführung in Abhängigkeit einer jeweiligen Betriebsart des Industriebrenners derart steuert, dass in einer ersten Betriebsart, beispielsweise zum Anfahren des Industriebrenners, mit Flammenbildung ausschließlich die erste Brennstoffzuführung Brennstoff in die Brennkammer führt, in einer zweiten Betriebsart zum brennstoffgestuften Betrieb mit Flammenbildung die erste Brennstoffzuführung Brennstoff in die Brennkammer und die zweite Brennstoffzuführung Brennstoff in den Heizraum führt und in einer dritten Betriebsart zum flammenlosen Betrieb des Industriebrenners nur die zweite Brennstoffzuführung Brennstoff in den Heizraum führt. Denkbar ist es, dass der brennstoffgestufte Betrieb der zweiten Betriebsart aufgrund der zum aus der Brennstoffzuführung austretenden Brennstoff erfolgenden Abgasbeimischung ohne eine gut sichtbare Flamme im Heizraum erfolgt.

Der Übergang von einer der einzelnen Betriebsarten in eine andere der einzelnen Betriebsarten kann unterbrechungslos erfolgen. Es kann auch ein direkter Übergang von der ersten in die dritte beschriebene Betriebsart erfolgen, ohne dass die zweite Betriebsart angesteuert wird. Bei der Verwendung von langsam öffnenden und/oder schließenden Brennstoffventilen findet automatisch zumindest kurzzeitig die Verbrennung in der beschriebenen zweiten Betriebsart statt.

Zur weiteren Verringerung der NOx-Emission ist in Ausgestaltung der Erfindung vorgesehen, dass die wenigstens eine Auslassöffnung der zweiten Brennstoffzuführung zu der Öffnung der Brennkammer radial beabstandet und im Wesentlichen im Bereich des Außenumfangs des Industriebrenners oder der dem Heizraum zugewandten Stirnfläche des Industriebrenners angeordnet ist. Dabei ist eine Anordnung angestrebt, bei welcher die wenigstens eine Auslassöffnung der zweiten Brennstoffzuführung radial betrachtet möglichst weit entfernt von der Öffnung der Brennkammer beabstandet angeordnet ist. Dieser Abstand ist geometrisch und konstruktiv durch den Durchmesser des Brenners oder durch die Größe der Stirnfläche des Brenners begrenzt. Ein großer Abstand der einzelnen düsenförmig ausgebildeten Öffnungen des Industriebrenners, dazu zählen sowohl die zumindest eine düsenförmige Öffnung der Brennkammer, die zumindest eine düsenförmige Auslassöffnung der zweiten Brennstoffzuführung und ggf. vorhandene weitere Brennluftdüsen für eine Realisierung einer zusätzlichen Luftstufung bei der Verbrennung, ist stets vorteilhaft, da jeder Strahl, der aus einer Düse austritt, Abgase aus seiner Umgebung ansaugt. Diese Abgasbeimischung führt bekanntermaßen zur Verminderung der thermischen Stickoxidbildung.

Im Hinblick auf eine Erhöhung des Wirkungsgrades ist in Ausgestaltung des Industriebrenners vorgesehen, dass innerhalb des Industriebrenners zumindest eine sich abschnittsweise in Längsrichtung des Industriebrenners erstreckende und optional auch die Brennkammer radial umgebende Wärmetauschvorrichtung vorgesehen ist, die aus dem Heizraum stammendes Abgas führt und das geführte Abgas durch Wärmeaustausch mit Brennluft abkühlt.

Dabei ist es in weiterer Ausgestaltung des Industriebrenners von Vorteil, wenn die zweite Brennstoffzuführung zumindest abschnittsweise zwischen der Brennkammer und der zumindest einen Wärmetauschvorrichtung verläuft.

Die zumindest eine Wärmetauschvorrichtung kann hierbei als Rekuperator ausgebildet sein, wobei ein Abgasführungsrohr den Rekuperator radial umgibt und zwischen dem Abgasführungsrohr und dem Rekuperator ein mit dem Heizraum in Strömungsverbindung stehender Abgaskanal gebildet ist, und wobei ferner ein von dem Rekuperator radial umgebendes Luftführungsrohr vorgesehen ist.

Um die Möglichkeit einer Brennluftstufung vorzusehen, sieht die Erfindung in weiterer Ausgestaltung des Industriebrenners mit Rekuperator vor, dass an der dem Heizraum zugewandten Stirnfläche des Rekuperators zumindest eine Brennluftöffnung, durch die Brennluft in den Heizraum gelangen kann, und die wenigstens eine in den Heizraum mündende Auslassöffnung der zweiten Brennstoffzuführung vorgesehen sind, wobei die wenigstens eine Auslassöffnung der zweiten Brennstoffzuführung und die zumindest eine Brennluftöffnung auf einem im Wesentlichen gleichen Umfangsradius der dem Heizraum zugewandten Stirnfläche des Rekuperators ausgebildet sind.

Alternativ kann die zumindest eine Wärmetauschvorrichtung als Regenerator mit einem oder mehreren Regenerator-Elementen ausgebildet sein. Beispielsweise könnten die Regenerator-Elemente radial um den Umfang der Brennkammer herum im Wesentlichen gleichmäßig beabstandet zueinander angeordnet sein.

Im Hinblick auf das erfindungsgemäße Verfahren ist ferner vorgesehen, dass bei einer Temperatur im Heizraum von unterhalb der Selbstzündtemperatur des Brennstoffs als Folgebetriebsart in eine zweite Betriebsart zum brennstoffgestuften Betrieb mit Flammenbildung gewechselt wird, bei der Brennstoff in die Brennkammer über die erste Brennstoffzuführung geführt und innerhalb der Brennkammer mit Brennluft vermischt wird, wobei der Brennstoff zumindest zum Teil in der Brennkammer durch Reaktion mit der Brennluft mit Flamme verbrannt wird und der aus der zweiten Brennstoffzuführung austretende Brennstoff mit dem mit Abgas vermischten Stoffstrom im Heizraum mit Flamme verbrannt wird. Im Gegensatz zur Betriebsart der flammenlosen Verbrennung kann von der ersten Betriebsart bereits vor Erreichen der Selbstzündtemperatur in die zweite Betriebsart gewechselt, um die NOx-Emission zu reduzieren.

Um den Industriebrenner weitestgehend mit geringster NOX-Emission zu betreiben, sieht die Erfindung in Weiterbildung des Verfahrens vor, dass bei Erreichen einer Temperatur im Heizraum, die oberhalb der Selbstzündtemperatur des Brennstoffs liegt, von der zweiten Betriebsart zum brennstoffgestuften Betrieb mit Flamme in eine dritte Betriebsart zum flammenlosen Betrieb des Industriebrenners gewechselt wird, bei der die Zufuhr von Brennstoff in die Brennkammer über die erste Brennstoffzuführung gestoppt wird und nur noch Brennluft als Stoffstrom aus der Öffnung der Brennkammer in den Heizraum geführt wird.

Alternativ kann der Industriebrenner auch nur in der ersten und dritten Betriebsart betrieben werden, wobei erfindungsgemäß diesbezüglich vorgesehen ist, dass bei einer Temperatur im Heizraum, die oberhalb der Selbstzündtemperatur des Brennstoffs liegt, als Folgebetriebsart in eine dritte Betriebsart zum flammenlosen Betrieb des Industriebrenners gewechselt wird, bei der die Zufuhr von Brennstoff in die Brennkammer über die erste Brennstoffzuführung gestoppt wird und im Wesentlichen Brennluft als Stoffstrom aus der Öffnung der Brennkammer in den Heizraum geführt wird.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte Ausführungsbeispiele der Erfindung dargestellt sind. In der Zeichnung zeigt:
Figur 1 einen Industriebrenner gemäß der Erfindung in einer ersten Ausführungsform im axialen Schnitt in Seitenansicht,
Figur 2 einen Industriebrenner gemäß einer zweiten Ausführungsform der Erfindung mit einem Rekuperator im axialen Schnitt in Seitenansicht und
Figur 3 ein beispielhaftes Diagramm zur Veranschaulichung der NOx-Emission bei unterschiedlichen Betriebsarten des Industriebrenners.

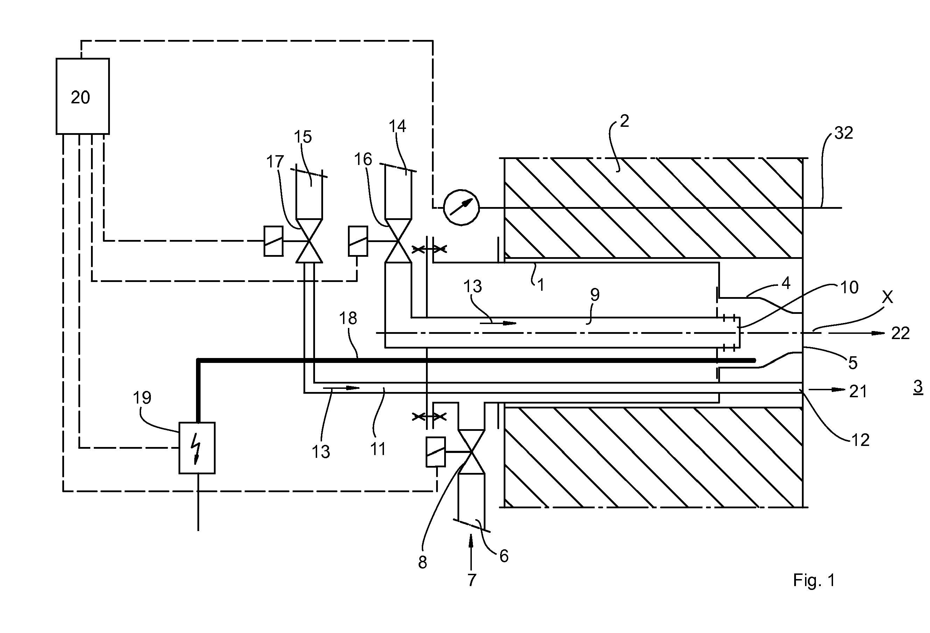

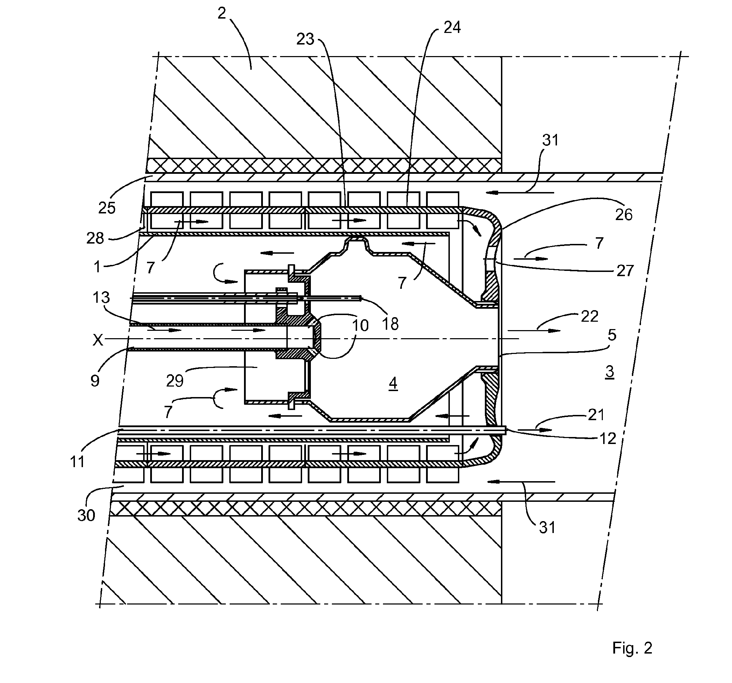

In der Figur 1 ist ein im Wesentlichen zylinderförmiger und als Impulsbrenner ausgebildeter Industriebrenner beispielhaft in seiner Einbauposition in einer Thermoprozessanlage dargestellt. Davon unterscheidet sich der in Figur 2 dargestellte Industriebrenner gemäß einer zweiten Ausführungsform durch das Merkmal einer Wärmetauschvorrichtung. Die nachstehende Beschreibung richtet sich jedoch auf beide Ausführungsformen des erfindungsgemäßen Industriebrenners, wobei die zwischen beiden Ausführungsformen vorhandenen Unterschiede explizit angesprochen werden.

Der Industriebrenner umfasst ein zylindrisches Mantelrohr bzw. Luftführungsrohr 1, mit welchem er zumindest abschnittsweise in einer im Durchmesser an den Industriebrenner angepassten zylindrischen Öffnung einer Ofenwand 2 der Thermoprozessanlage eingebaut ist. Der Industriebrenner dient zur direkten oder indirekten Beheizung eines Heizraumes 3. Dabei ist der Heizraum 3 bei direkter Beheizung der Ofenraum selbst, wohingegen bei indirekter Beheizung der Heizraum 3 von einem in den Ofenraum hineinragenden Strahlheizrohr gebildet und begrenzt ist. In dem Industriebrenner ist eine im Wesentlichen rotationssymmetrisch ausgebildete und hochhitzebeständige Brennkammer 4 integriert, die an einem dem Heizraum 3 zugewandten Ende des Mantelrohres 1 angeordnet und dort an dem Mantelrohr 1 befestigt ist. Die Brennkammer 4 umfasst eine in den Heizraum 3 mündende Öffnung 5, wobei die Brennkammer 4 bis zur Öffnung 5 eine düsenförmige Querschnittsverengung aufweist.

Auf der dem Heizraum 3 abgewandten Seite der Ofenwand 2 ist eine Brennluftzuführleitung 6 an das Mantelrohr 1 angeschlossen, über die Brennluft 7 dem Industriebrenner und ausschließlich der Brennkammer 4 zugeführt wird. In der Brennluftzuführleitung 6 ist ein erstes Ventilmittel 8 zur Regulierung der Brennluft-Menge angeordnet, wobei im Betrieb des Industriebrenners die Brennluft 7 der Brennkammer 4 über die Brennluftzuführleitung 6 dauerhaft zugeführt wird. Der Industriebrenner umfasst ferner eine erste Brennstoffzuführung 9 mit wenigstens einer in der Brennkammer 4 mündenden Zuführöffnung 10 und eine zweite Brennstoffzuführung 11 mit einer in den Heizraum 3 mündenden Auslassöffnung 12. Die beiden Brennstoffzuführungen 9 und 11 können je nach Betriebsart des Industriebrenners Brennstoff 13 führen. Zu diesem Zweck sind die nach Art einer jeweiligen Brennstofflanze ausgebildeten Brennstoffzuführungen 9, 11 außerhalb der Ofenwand 2 jeweils mit einer Brennstoffzuführleitung 14 bzw. 15 verbunden, in denen ein zweites Ventilmittel 16 bzw. ein drittes Ventilmittel 17 zur Regulierung der Menge an Brennstoff 13 angeordnet ist. Die Brennstoffzuführleitungen 14, 15 können zu verschiedenen Brennstoffquellen führen, so dass zwei verschiedene Arten von Brennstoff dem Industriebrenner zugeführt werden können. In der Regel sind aber die beiden Brennstoffzuführleitungen 14, 15 mit einer gemeinsamen Brennstoffquelle verbunden, so dass dem Industriebrenner ein einziger Brennstoff 13 in gasförmiger (z.B. Erdgas oder Propan) Form zugeführt wird.

Seitlich von und parallel zu der ersten Brennstoffzuführung 9 erstreckt sich innerhalb des Industriebrenners eine bekannte elektrische Zündelektrode 18, die mit einer elektrischen Hochspannungsversorgung 19 gekoppelt ist und die zur Zündung eines in der Brennkammer 4 vorhandenen Gemisches aus Brennluft 7 und Brennstoff 13 dient. Die Hochspannungsversorgung 19 und die Ventilmittel 8, 16 und 17 sind von einer Steuervorrichtung 20 ansteuerbar, die ferner den Industriebrenner ein- und ausschalten kann und durch die der Industriebrenner in unterschiedlichen Betriebsarten betreibbar ist, die nachstehend noch detailliert erläutert werden. Mit Hilfe der Steuervorrichtung 20 wird somit die Zuführung von Brennstoff 13 derart gesteuert bzw. reguliert, dass im Betrieb des Industriebrenners entweder nur die erste Brennstoffzuführung 9, nur die zweite Brennstoffzuführung 11 oder beide Brennstoffzuführungen 9, 11 gleichzeitig Brennstoff 13 führen können.

Wie Figur 1 zu entnehmen ist, verläuft die zweite Brennstoffzuführung 11 zumindest abschnittsweise innerhalb des Industriebrenners, wobei der im Industriebrenner verlaufende Abschnitt der zweiten Brennstoffzuführung 11 außerhalb der Brennkammer 4 angeordnet ist. Die zweite Brennstoffzuführung 11 ist ferner als stabförmige Brennstofflanze ausgebildet, die sich innerhalb des Industriebrenners parallel zur Längsachse X des Industriebrenners erstreckt. Das in Längsrichtung bzw. parallel zur Längsachse X des Industriebrenners verlaufende und aus diesem herausragende Ende der zweiten Brennstoffzuführung 11 weist die wenigstens eine Auslassöffnung 12 auf, die in den Heizraum 3 mündet. Die Auslassöffnung 12 ist mit Bezug auf die Längsachse X des Industriebrenners radial nach außen zu der Öffnung 5 der Brennkammer 4 versetzt angeordnet, endet aber in axialer Richtung in etwa auf gleicher Höhe wie die Öffnung 5. Da der Abstand der Auslassöffnung 12 von der Öffnung 5 für eine gute NOx-mindernde Wirkung möglichst groß sein sollte, kann die Öffnung 5 auch außerhalb der Brennermitte bzw. radial oder seitlich versetzt zur Längsachse X des Industriebrenners in der Art angeordnet sein, dass dadurch ein größerer Abstand der Öffnung 5 zur Auslassöffnung 12 entsteht. Insbesondere ist die Auslassöffnung 12 der zweiten Brennstoffzuführung 11 im Wesentlichen im Bereich des Außenumfangs des Mantelrohres 1 des Industriebrenners angeordnet. Durch diese Anordnung der zweiten Brennstoffzuführung 11 in Bezug auf die Öffnung 5 ist Brennstoff 13 bzw. ein Brennstoffstrom 21 separat von einem aus der Brennkammer 4 austretenden Stoffstrom 22 dem Heizraum 3 zuführbar. Bei dem mit hoher Geschwindigkeit aus der Öffnung 5 der Brennkammer 4 austretenden Stoffstrom 22 kann es sich je nach Betriebsart des Industriebrenners um ein zumindest teilweise zu Abgas verbranntes und noch mit Flamme verbrennendes Brennstoff-Brennluft-Gemisch oder um reine Brennluft 7 handeln.

Bevor eine Beschreibung eines Verfahrens zum Betreiben des Industriebrenners erfolgt, wird zunächst die zweite Ausführungsform eines erfindungsgemäßen Industriebrenners beschrieben, der in axialer Schnittansicht in Figur 2 dargestellt ist. Aus Gründen der Übersichtlichkeit ist in Figur 2 auf eine Darstellung der Brennluftzuführleitung 6, der Brennstoffzuführleitung 14 und 15, der Ventilmittel 8, 16 und 17, der elektrischen Zündelektrode 18, der elektrischen Hochspannungsversorgung 19 und der Steuervorrichtung 20 verzichtet worden. Es versteht sich jedoch von selbst, dass auch diese Merkmale bei der zweiten Ausführungsform vorhanden sind.

Die zweite Ausführungsform unterscheidet sich von der ersten Ausführungsform insbesondere dadurch, dass innerhalb des Industriebrenners zumindest eine sich abschnittsweise in Längsrichtung X des Industriebrenners erstreckende Wärmetauschvorrichtung 23 vorgesehen ist, welche die Brennkammer 4 radial umgeben kann und als Rekuperator 24 mit Rippen ausgebildet ist. Wenn der Brenner, wie in Figur 2 dargestellt, in einem Strahlrohr eingebaut ist, dient das Strahlrohr um den Rekuperator herum als Abgasführungsrohr 25. Bei direkter Beheizung oder auch bei Strahlrohren, die einen deutlich größeren Durchmesser als der Brenner haben, wird der Brenner mit einem eigenen Abgasführungsrohr ausgeführt, welches dann als Bestandteil des Brenners den Außenumfang des Industriebrenners definiert und welches die Wärmetauschvorrichtung 23 radial umgibt. Der Industriebrenner gemäß der zweiten Ausführungsform umfasst ferner das Luftführungsrohr 1, welches von der Wärmetauschvorrichtung 23 radial umgeben ist. Das Abgasführungsrohr 25, der Rekuperator 24, das Luftführungsrohr 1 und die Brennkammer 4 sind im Wesentlichen konzentrisch zueinander angeordnet, wobei sich der Rekuperator 24 fast über die gesamte Axiallänge des Industriebrenners erstrecken kann. Die erste, nach Art einer Brennstofflanze ausgebildete Brennstoffzuführung 9 ist wie bei der ersten Ausführungsform zentral im Industriebrenner angeordnet und weist Zuführöffnungen 10 auf, die in der Brennkammer 4 münden. Ferner erstreckt sich innerhalb des Industriebrenners die zweite Brennstoffzuführung 11 mit der in dem Heizraum 3 mündenden Auslassöffnung 12. Die zweite Brennstoffzuführung 11 ist dabei derart im Industriebrenner angeordnet, dass sie nicht durch die Brennkammer 4 geführt ist, sondern sich teilweise bzw. zumindest abschnittsweise zwischen der Brennkammer 4 und der Wärmetauschvorrichtung 23 bis zum Kopf 26 des Rekuperators 24 bzw. bis zu der dem Heizraum 3 zugewandten Stirnfläche des Industriebrenners erstreckt. An dem stirnseitigen Ende bzw. im Kopf 26 der als Rekuperator 24 ausgebildeten Wärmetauschvorrichtung 23 sind ferner mehrere Brennluftöffnungen 27 vorgesehen, die umfangsmäßig im Wesentlichen gleichmäßig beabstandet zueinander angeordnet sind.

Mit Hilfe der ersten Brennstoffzuführung 9 kann Brennstoff 13 in die Brennkammer 4 geführt werden, wohingegen die zweite Brennstoffzuführung 11 Brennstoff 13 direkt in den Heizraum 3 hinein führen kann. Der Brennstoff 13 ist gasförmig. Ferner kann Brennluft 7 in die Brennkammer 4 und direkt in den Heizraum 3 geführt werden. Insbesondere wird bei der in Figur 2 dargestellten zweiten Ausführungsform des Industriebrenners die Brennluft 7 in einem zwischen der Wärmetauschvorrichtung 23 bzw. dem Rekuperator 24 und dem Luftführungsrohr 1 gebildeten Brennluftkanal 28 entlang des Rekuperators 24 in Richtung dessen Kopfes 26 geführt. Im Bereich des Kopfes 26 kann dann ein Teil der geführten Brennluft 7 über die Brennluftöffnungen 27 in den Heizraum 3 gelangen, wohingegen der andere Teil der Brennluft 7 vom Kopf 26 des Rekuperators 24 weg strömt und über einen Einlass 29 in die Brennkammer 4 gelangt. Alternativ könnte der zum Einlass 29 geführte Luftstrom auch durch Öffnungen im Luftführungsrohr im Bereich der Öffnung 29 auf kürzerem Weg aus dem Brennluftkanal 28 zur Einlassöffnung 29 geführt werden.

Zwischen dem Abgasführungsrohr 25 und dem Rekuperator 24 ist ein ringraumförmiger Abgaskanal 30 gebildet, der von Abgas 31 aus dem Heizraum 3 durchströmt wird. Zu diesem Zweck steht der Abgaskanal 30 mit dem Heizraum 3 in Strömungsverbindung, wobei das Abgas 31 den Rekuperator 24 entgegen der Strömungsrichtung der Brennluft 7 durchströmt und bei Durchströmung seine Wärme an den Rekuperator 24 abgibt. Somit erfolgt mit Hilfe des Rekuperators 24 der Wärmeaustausch von dem Abgas 31 auf die Brennluft 7 nach dem Gegenstromprinzip, wodurch sich das Abgas 31 bei Durchströmung des Rekuperators 24 abkühlt. Da für einen hohen Wirkungsgrad eine starke Abkühlung des Abgases 31 erforderlich ist, wird sich der Rekuperator 24 möglichst über die gesamte Axiallänge des Industriebrenners erstrecken. Somit führt die Wärmetauschvorrichtung 23 aus dem Heizraum 3 stammendes Abgas 31 und kühlt das geführte Abgas 31 durch Wärmeaustausch mit Brennluft 7 ab.

Der vorstehend beschriebene konstruktive Aufbau für beide Ausführungsformen ermöglicht einen Betrieb des Industriebrenners in unterschiedlichen Betriebsarten, wobei zu diesem Zweck die Ventilmittel 8, 16 und 17 und die Steuerungsvorrichtung 20 vorgesehen sind, durch die die dauerhafte Zuführung von Brennluft 7 in die Brennkammer 4 im Betrieb des Industriebrenners und die Zuführung von Brennstoff 13 zu der ersten und/oder zweiten Brennstoffzuführung 9, 11 in Abhängigkeit einer jeweiligen Betriebsart des Industriebrenners sichergestellt ist. Dabei endet die erste Brennstoffzuführung 9 mit mindestens einer Düse 10 in der Brennkammer 4 zur Einbringung von Brennstoff 13 in die Brennkammer 4. Die zweite Brennstoffzuführung 11, die nicht durch die Brennkammer 4 geführt ist, endet mit mindestens einer Düse 12 an der Stirnseite des Industriebrenners zur Einbringung von Brennstoff 13 in den Heizraum 3.

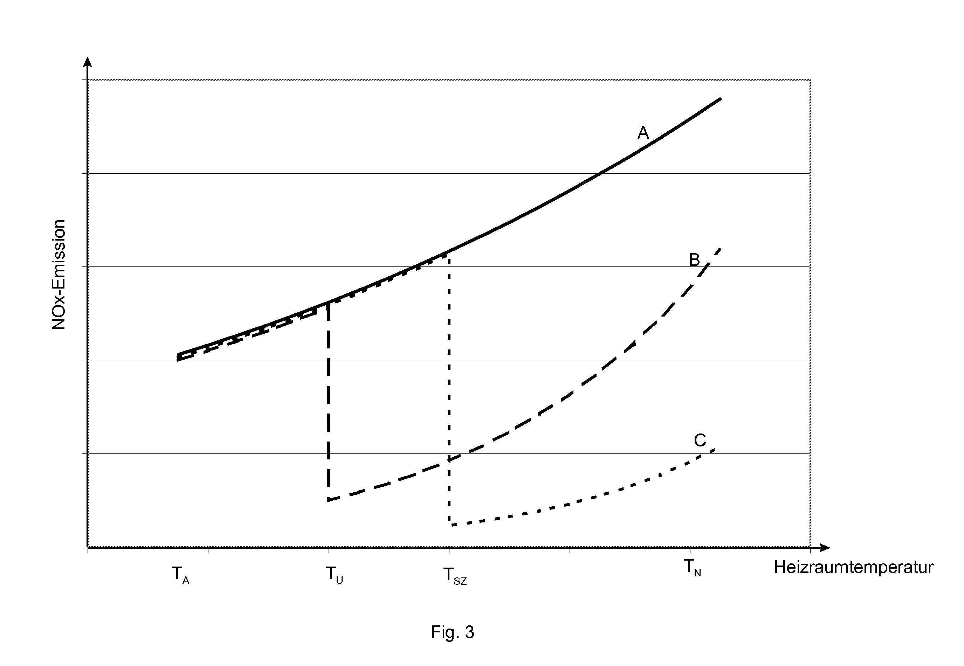

Nachstehend wird das erfindungsgemäße Verfahren, welches bei beiden Ausführungsformen angewandt werden kann, mit Bezug auf Figur 3 beschrieben. Aus dem kalten Zustand bei einer Heizraumtemperatur T_{A} wird der Industriebrenner zunächst in einer ersten Betriebsart angefahren, wobei im Betrieb des Industriebrenners dauerhaft Brennluft 7 in die Brennkammer 4 geführt wird. In der ersten Betriebsart zum Anfahren des Industriebrenners wird der Brennstoff 13 ausschließlich über die erste Brennstoffzuführung 9 in die Brennkammer 4 eingebracht, mit Brennluft 13 vermischt, gezündet und in der Brennkammer 4 zumindest teilweise unter Bildung einer sichtbaren und stabilen Flamme verbrannt. Dementsprechend führt in der ersten Betriebsart zum Anfahren des Industriebrenners ausschließlich die erste Brennstoffzuführung 9 Brennstoff 13 in die Brennkammer 4, wohingegen von der zweiten Brennstoffzuführung 11 kein Brennstoff 13 geführt wird, wobei die Steuervorrichtung 20 die entsprechende Zuführung von Brennluft 7 und Brennstoff 13 und deren entsprechende Mengen steuert bzw. regelt. Das in der Brennkammer 4 erzeugte Brennstoff-Brennluft-Gemisch wird mit Hilfe der Zündelektrode 18 gezündet und unter Bildung einer Flamme zumindest teilweise in der Brennkammer 4 verbrannt. Bei sehr kompakten Brennkammern findet innerhalb der Brennkammer 4 kein vollständiger Ausbrand statt, sodass auch in Strömungsrichtung hinter der Düse der Brennkammer 4 bzw. stromab der düsenförmigen Öffnung 5 der Brennkammer 4 im Heizraum 3 eine Flamme sichtbar ist. Dabei bewirkt der aus der Öffnung 4 austretende Stoffstrom 21 bzw. Strahl neben einer Erhöhung der Heizraumtemperatur, dass Abgase 31 im Heizraum 3 in den sich ausbreitenden Strahl hinein angesaugt werden. Bei der ersten Betriebsart steigt die Temperatur im Heizraum 3 an, wobei durch den Verbrennungsprozess bei steigender Temperatur die NOx-Emission ansteigt, wie durch die durchgezogene Linie A in Figur 3 dargestellt ist.

Um die NOx-Emission zu mindern, wird nach dem Anfahren des Industriebrenners in eine Folgebetriebsart gewechselt, bei welcher zumindest von der zweiten Brennstoffzuführung 11 Brennstoff 13 in den Heizraum 3 geführt wird. Wie vorstehend beschrieben, wird in der Folgebetriebsart der von der zweiten Brennstoffzuführung 11 geführte Brennstoff 13 separat von dem aus der Brennkammer 4 austretenden Stoffstrom 21 dem Heizraum 3 zugeführt. Dabei werden in dem Heizraum 3 der aus der Brennkammer 4 austretende Stoffstrom 21 durch eine erste Injektorwirkung mit dem im Heizraum 3 befindlichen Abgas 31 und der aus der zweiten Brennstoffzuführung 11 getrennt von dem Stoffstrom 21 in den Heizraum 3 austretende Brennstoff 13 durch eine zweite Injektorwirkung mit dem im Heizraum 3 befindlichen Abgas 31 vermischt, wobei anschließend der mit Abgas 31 gemischte Brennstoff 13 mit dem mit Abgas 31 gemischten Stoffstrom 21 verbrannt wird.

Mit Bezug auf Figur 3 kann von der ersten Betriebsart in die Folgebetriebsart bereits bei einer Heizraumtemperatur Tᵤ, die unterhalb einer entsprechenden Selbstzündtemperatur T_{SZ} des Brennstoffs 13 liegt, gewechselt werden. In diesem Fall entspricht die Folgebetriebsart einer zweiten Betriebsart zum brennstoffgestuften Betrieb des Industriebrenners, bei der der Brennstoff 13 in die Brennkammer 4 über die erste Brennstoffzuführung 9 geführt und innerhalb der Brennkammer 4 mit Brennluft 7 vermischt wird, wobei der Brennstoff 13 zumindest zum Teil in der Brennkammer 4 durch Reaktion mit der Brennluft 7 mit sichtbarer Flamme verbrannt wird. Zusätzlich wird dem Heizraum 3 über die zweite Brennstoffzuführung 11 Brennstoff 13 zugeführt. Somit wird in der zweiten Betriebsart zum brennstoffgestuften Betrieb, bei der die Heizraumtemperatur zwar angestiegen ist, aber noch nicht die erforderliche Selbstzündtemperatur T_{SZ} des verwendeten Brennstoffs 13 erreicht hat, zur Verminderung der NOx-Emission Brennstoff 13 über beide Brennstoffzuführungen 9 und 11 zugeführt. Dabei wird das in der Brennkammer 4 erzeugte Brennstoff-Brennluft-Gemisch wieder unter Bildung einer Flamme zumindest teilweise in der Brennkammer 4 verbrannt. Da in der zweiten Betriebsart die der Brennkammer 4 über die erste Brennstoffzuführung 9 zugeführte Menge an Brennstoff 13 verringert wird, erfolgt die Verbrennung innerhalb der Brennkammer 4 nun mit einem im Vergleich zur ersten Betriebsart relativ hohen Luftüberschuss. Aus der Düse bzw. der Öffnung 5 der Brennkammer 4 tritt dann ein Stoffgemisch bzw. Stoffstrom 21 bzw. ein Flammenstrahl mit noch hohem Restluftgehalt aus. Im Heizraum 3 trifft dann dieser Stoffstrom 21 mit hohem Restluftgehalt mit dem Brennstoff 13 aus der zweiten, außerhalb der Brennkammer 4 geführten Brennstoffzuführung 11 zusammen, so dass im Heizraum 3 der vollständige Ausbrand, wiederum unter Bildung einer Flamme, stattfindet. Dabei steigt mit zunehmender Heizraumtemperatur die NOx-Emission an, wie die gestrichelte Linie B in Figur 3 darstellt, wobei aber im Vergleich zur ersten Betriebsart die NOx-Emission geringer ausfällt. Für die zweite Betriebsart ist prinzipiell keine Mindesttemperatur erforderlich. Vorteilhaft für einen weitgehend vollständigen Ausbrand, insbesondere mit Kohlenmonoxid-Emissionswerten unter 50 ppm, sind Heizraumtemperaturen von über 600°C. Der Übergang von der ersten in die zweite Betriebsart kann daher fließend und ohne Unterbrechung des Brennerbetriebs erfolgen. Dementsprechend führen in der zweiten Betriebsart zum brennstoffgestuften Betrieb des Industriebrenners die erste Brennstoffzuführung 9 Brennstoff 13 in die Brennkammer 4 und die zweite Brennstoffzuführung 11 Brennstoff 13 in den Heizraum 3, wobei der Übergang von der ersten Betriebsart in die zweite Betriebsart unterbrechungslos erfolgt. Die Verbrennung in der zweiten Betriebsart erfolgt mit sichtbarer Flamme in der Brennkammer 4 und mit einer sichtbaren Flamme im Heizraum 3. Denkbar ist es, dass der brennstoffgestufte Betrieb der zweiten Betriebsart aufgrund der zum aus der Brennstoffzuführung 11 austretenden Brennstoff 13 erfolgenden Abgasbeimischung ohne eine gut sichtbare Flamme im Heizraum erfolgt.

Um bis zur Erreichung der gewünschten Heizraumtemperatur T_{N} möglichst geringe NOx-Emissionen zu erzeugen, kann von der zweiten Betriebsart in eine dritte Betriebsart zum flammenlosen Betrieb des Industriebrenners gewechselt werden, wenn die Heizraumtemperatur im Wesentlichen die Selbstzündtemperatur T_{SZ} des verwendeten Brennstoffs 13 erreicht hat. Bei der dritten Betriebsart wird die Zufuhr von Brennstoff 13 in die Brennkammer 4 über die erste Brennstoffzuführung 9 gestoppt, so dass im Wesentlichen Brennluft 7 als Stoffstrom 21 aus der Öffnung 5 der Brennkammer 4 in den Heizraum 3 geführt wird. Somit wird in der dritten Betriebsart zum flammenlosen Betrieb des Industriebrenners bei bis über die Selbstzündtemperatur T_{SZ} des verwendeten Brennstoffs 13 hinaus gestiegener Heizraumtemperatur wiederum zur Verminderung der NOx-Emission nun alleine und nur über die zweite, außerhalb der Brennkammer 4 geführte Brennstoffzuführung 11 Brennstoff 13 zugeführt. Dabei findet innerhalb der Brennkammer 4 keine Verbrennung mehr statt, da nur noch die Brennluft 7 durch die Brennkammer 4 strömt. Aus der düsenförmigen Öffnung 5 der Brennkammer 4 tritt also nur ein Brennluftstrom als Stoffstrom 21 aus. Im Heizraum 3 trifft dann dieser Brennluftstrom bzw. Stoffstrom 21 mit Abgas 31 und dem Brennstoff 13 aus der zweiten, außerhalb der Brennkammer 4 geführten Brennstoffzuführung 11 zusammen, so dass im Heizraum 3 oberhalb der Selbstzündtemperatur T_{SZ} des Brennstoffs 13 eine flammenlose und vollständige Verbrennung ohne Bildung einer sichtbaren Flamme, bei sehr niedriger thermischer Stickoxidbildung, stattfindet. Die bei der dritten Betriebsart mit Erhöhung der Heizraumtemperatur ansteigende NOx-Emission ist in Figur 3 in Form der gepunkteten Linie C gezeigt. Um sicherzustellen, dass im Heizraum 3 die Selbstzündtemperatur T_{SZ} des Brennstoffs 13 erreicht ist, kann die Steuerungsvorrichtung 20 ferner mit einer Temperatursonde 32 (siehe Figur 1) gekoppelt sein, die die im Heizraum 3 vorherrschende Temperatur bestimmt.

Der Übergang von einer der einzelnen Betriebsarten in eine andere der einzelnen Betriebsarten kann unterbrechungslos erfolgen. Besonders effektiv in Bezug auf eine geringe NOx-Emission ist ein zweimaliges Umschalten der Betriebsart, wie vorstehend beschrieben. Es kann auch ein direkter Übergang von der ersten in die dritte beschriebene Betriebsart erfolgen, ohne dass die zweite Betriebsart angesteuert wird. Bei der Verwendung von langsam öffnenden und/oder schließenden Brennstoffventilen findet automatisch zumindest kurzzeitig die Verbrennung in der beschriebenen zweiten Betriebsart statt.

Aufgrund des konstruktiven Aufbaus des erfindungsgemäßen Industriebrenners ist ein Betrieb für wenigstens zwei Betriebsarten möglich. Der flammenlose Betrieb ist in der Regel nur oberhalb der Mindesttemperatur, d.h. der Selbstzündtemperatur T_{SZ} des Brennstoffs 13, durchführbar. Daher verfügt der Industriebrenner über die Möglichkeit, bei zu kaltem Heizraum 3 in der ersten Betriebsart mit Flamme betrieben werden zu können. Bei dem Industriebrenner dient die im Brenner integrierte bzw. Brenner-interne Brennkammer 4 in der ersten Betriebsart zur Stabilisierung der Flamme und in der dritten, sogenannten flammenlosen Betriebsart lediglich zur Weiterleitung von Brennluft 7 in den Heizraum 3. In der dritten Betriebsart bei genügend hoher Heizraumtemperatur wird der Brennstoff 13 daher über die zweite Brennstoffzuführung 11, die nicht durch die Brennkammer 4 geführt ist, direkt in den Heizraum 3 eingebracht und dort mit Abgas 31 aus dem Heizraum 3 und zumindest mit Brennluft 7 vermischt. Somit führt in der dritten Betriebsart zum flammenlosen Betrieb des Industriebrenners allein die zweite Brennstoffzuführung 11 Brennstoff 13 in den Heizraum 3. Die Zündung des Gemisches erfolgt durch Selbstzündung, wobei die Verbrennung ohne Ausbildung einer sichtbaren Flamme und mit geringer NOx-Emission erfolgt. Die genügend hohe Heizraumtemperatur ist theoretisch die Selbstzündtemperatur T_{SZ} des jeweiligen Brennstoffs 13 in Brennluft 7 oder im jeweiligen Brenngas-Brennluft-Abgas-Gemisch. Um in der Praxis die Selbstzündung des Gemisches sicher und ohne Pulsationen zu gewährleisten, muss das Gemisch aus meist kaltem Brennstoff 13, mehr oder weniger vorgewärmter Brennluft 7 und heißem Abgas 31 eine Gemisch-Temperatur von deutlich über der theoretischen Zündtemperatur aufweisen. Die theoretische Zündtemperatur von als Brennstoff verwendetem Methan, dem Hauptbestandteil von Erdgas, beträgt ca. 600°C. Die die Sicherheitsanforderungen an industrielle Feuerungen festlegende Norm (EN 746-2) nennt 750°C als untere Grenze für den Betrieb einer Feuerung ohne Flammenüberwachung, wozu die flammenlose Verbrennung zählt. In der Praxis wird diese Betriebsart oft erst bei Temperaturen im Heizraum von etwa 850°C eingestellt.

Zusammenfassend wird durch die vorliegende Erfindung ein Industriebrenner mit einer am Brenner montierten Brennkammer bereitgestellt, wobei die Brennkammer mit wenigstens einer Mündung in den Heizraum versehen ist, durch die im Betrieb ein Stoffstrom in den Heizraum austritt. Es sind zwei getrennte Brennstoffzuführungen für einen Betrieb des Brenners mit mindestens zwei unterschiedlichen Betriebsarten eingebaut.

Die vorstehend beschriebene Erfindung ist selbstverständlich nicht auf die beschriebenen und dargestellten Ausführungsformen beschränkt. Die Erfindung der zweiten Brennstoffzuführung, die außerhalb der Brennkammer zwischen dieser und dem Luftführungsrohr des Brenners oder eines anderen im Außenbereich des Brenners eingebauten Rohres oder eingebauter Wandung angeordnet ist, wurde exemplarisch am Beispiel eines Industriebrenners mit Rekuperator beschrieben. Der Fachmann wird erkennen, dass sich die Merkmale auch auf einen Industriebrenner mit Regenerator übertragen lassen. Hierbei würde dann die zweite Brennstoffzuführung zwischen der Brennkammer und einem oder mehreren Regenerator-Elementen des Regenerators angeordnet sein. Ferner können an den in der Zeichnung dargestellten Ausführungsformen zahlreiche, dem Fachmann entsprechend der beabsichtigten Anwendung naheliegende Abänderungen vorgenommen werden, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von dem konkreten Ausführungsbeispielen für den Fachmann naheliegt.

## Patentansprüche

1. Industriebrenner einer Thermoprozessanlage zur direkten oder indirekten Beheizung eines Ofenraumes, der eine Brennkammer (4) mit wenigstens einer in einem Heizraum (3) mündenden Öffnung (5), durch die im Betrieb des Industriebrenners ein Stoffstrom (22) aus der Brennkammer (4) in den Heizraum (3) gelangt, eine Brennluftzuführleitung (6), eine erste Brennstoffzuführung (9), die wenigstens eine in der Brennkammer (4) mündende Zuführöffnung (10) aufweist, eine zweite Brennstoffzuführung (11), die zumindest abschnittsweise innerhalb des Industriebrenners verläuft, und eine die Zuführung von Brennstoff (13) steuernde Steuervorrichtung (20) umfasst, durch die der Industriebrenner in wenigstens zwei Betriebsarten betreibbar ist,
**dadurch gekennzeichnet, dass**
die zweite Brennstoffzuführung (11) außerhalb der Brennkammer (4) verläuft und wenigstens eine in den Heizraum (3) mündende Auslassöffnung (12) aufweist, die zu der wenigstens einen Öffnung (5) der Brennkammer (4) mit Bezug auf die Längsachse (X) des Industriebrenners radial nach außen hin versetzt angeordnet ist und durch die Brennstoff (13) separat von dem aus der Brennkammer (4) austretenden Stoffstrom (22) dem Heizraum (3) zuführbar ist, wobei im Betrieb des Industriebrenners mit Hilfe der Steuervorrichtung (20) beiden Brennstoffzuführungen (9, 11) jeweils separat oder gleichzeitig Brennstoff (13) zuführbar ist.

2. Industriebrenner nach Anspruch 1, **dadurch gekennzeichnet, dass** die Steuervorrichtung (20) die Zuführung von Brennstoff (13) zu der ersten Brennstoffzuführung (9) und zu der zweiten Brennstoffzuführung (11) in Abhängigkeit einer jeweiligen Betriebsart des Industriebrenners derart steuert, dass
in einer ersten Betriebsart zum Anfahren mit Flammenbildung ausschließlich die erste Brennstoffzuführung (9) Brennstoff (13) in die Brennkammer (4) führt,
in einer zweiten Betriebsart zum brennstoffgestuften Betrieb mit Flammenbildung die erste Brennstoffzuführung (9) Brennstoff (13) in die Brennkammer (4) und die zweite Brennstoffzuführung (11) Brennstoff (13) in den Heizraum (3) führt und
in einer dritten Betriebsart zum flammenlosen Betrieb des Industriebrenners nur die zweite Brennstoffzuführung (11) Brennstoff (13) in den Heizraum (3) führt.

3. Industriebrenner nach Anspruch 1 oder 2, **dadurch gekennzeichnet, dass** die wenigstens eine Auslassöffnung (12) der zweiten Brennstoffzuführung (11) zu der Öffnung (5) der Brennkammer (4) radial beabstandet und im Wesentlichen im Bereich des Außenumfangs des Industriebrenners oder der dem Heizraum (3) zugewandten Stirnfläche des Industriebrenners angeordnet ist.

4. Industriebrenner nach einem der vorhergehenden Ansprüche, **dadurch gekennzeichnet, dass** innerhalb des Industriebrenners zumindest eine sich abschnittsweise in Richtung der Längsachse (X) des Industriebrenners erstreckende Wärmetauschvorrichtung (23) vorgesehen ist, die aus dem Heizraum (3) stammendes Abgas (31) führt und das geführte Abgas (31) durch Wärmeaustausch mit Brennluft (7) abkühlt.

5. Industriebrenner nach Anspruch 4, **dadurch gekennzeichnet, dass** die zweite Brennstoffzuführung (11) zumindest abschnittsweise zwischen der Brennkammer (4) und der zumindest einen Wärmetauschvorrichtung (23) verläuft.

6. Industriebrenner nach Anspruch 4 oder 5, **dadurch gekennzeichnet, dass** die zumindest eine Wärmetauschvorrichtung (23) als Rekuperator (24) ausgebildet ist, wobei ein Abgasführungsrohr (25) den Rekuperator (24) radial umgibt und zwischen dem Abgasführungsrohr (25) und dem Rekuperator (24) ein mit dem Heizraum (3) in Strömungsverbindung stehender Abgaskanal (30) gebildet ist, und wobei ferner ein von dem Rekuperator (24) radial umgebendes Luftführungsrohr (1) vorgesehen ist.

7. Industriebrenner nach Anspruch 6, **dadurch gekennzeichnet, dass** an der dem Heizraum (3) zugewandten Stirnfläche (26) des Rekuperators (24) zumindest eine Brennluftöffnung (27), durch die Brennluft (7) in den Heizraum (3) gelangen kann, und die wenigstens eine in den Heizraum (3) mündende Auslassöffnung (12) der zweiten Brennstoffzuführung (11) vorgesehen sind, wobei die wenigstens eine Auslassöffnung (12) der zweiten Brennstoffzuführung (11) und die zumindest eine Brennluftöffnung (27) auf einem im Wesentlichen gleichen Umfangsradius der dem Heizraum (3) zugewandten Stirnfläche (26) des Rekuperators (24) ausgebildet sind.

8. Industriebrenner nach Anspruch 4 oder 5, **dadurch gekennzeichnet, dass** die zumindest eine Wärmetauschvorrichtung (23) als Regenerator mit einem oder mehreren Regenerator-Elementen ausgebildet ist.

9. Verfahren zum Betreiben eines Industriebrenners einer Thermoprozessanlage zur direkten oder indirekten Beheizung eines Ofenraumes, wobei der Industriebrenner eine Brennkammer (4) mit wenigstens einer in einem Heizraum (3) mündenden Öffnung (5), durch die im Betrieb des Industriebrenners ein Stoffstrom (22) aus der Brennkammer (4) in den Heizraum (3) gelangt, eine Brennluftzuführleitung (6), eine erste Brennstoffzuführung (9), die wenigstens eine in der Brennkammer (4) mündende Zuführöffnung (10) aufweist, eine zweite Brennstoffzuführung (11) und eine die Zuführung von Brennstoff (13) steuernde Steuervorrichtung (20) umfasst, durch die der Industriebrenner in wenigstens zwei Betriebsarten betreibbar ist, wobei im Betrieb des Industriebrenners dauerhaft Brennluft (7) in die Brennkammer (4) geführt wird und in einer ersten Betriebsart zum Anfahren des Industriebrenners ausschließlich von der ersten Brennstoffzuführung (9) Brennstoff (13) in die Brennkammer (4) geführt wird, in welcher das Gemisch aus Brennstoff (13) und Brennluft (7) bei stabiler Flamme zumindest teilweise verbrannt wird, und wobei nach dem Anfahren des Industriebrenners in eine Folgebetriebsart gewechselt wird, bei welcher zumindest von der zweiten Brennstoffzuführung (11) Brennstoff (13) in den Heizraum (3) geführt wird,
**dadurch gekennzeichnet, dass**
in der Folgebetriebsart der von der zweiten Brennstoffzuführung (11) geführte Brennstoff (13) separat und beabstandet von dem aus der Brennkammer (4) austretenden Stoffstrom (22) dem Heizraum (3) zugeführt wird, wobei in der Folgebetriebsart in dem Heizraum (3) der aus der Brennkammer (4) austretende Stoffstrom (22) durch eine erste Injektorwirkung mit dem im Heizraum (3) befindlichen Abgas und der aus der zweiten Brennstoffzuführung (11) getrennt von dem Stoffstrom (22) in den Heizraum (3) austretende Brennstoff (13) durch eine zweite Injektorwirkung mit dem im Heizraum (3) befindlichen Abgas vermischt werden und anschließend der mit Abgas gemischte Brennstoff (13) mit dem mit Abgas gemischten Stoffstrom (22) verbrannt wird.

10. Verfahren nach Anspruch 9, **dadurch gekennzeichnet, dass** bei einer Temperatur (Tᵤ) im Heizraum (3) von unterhalb der Selbstzündtemperatur (T_{SZ}) des Brennstoffs (13) als Folgebetriebsart in eine zweite Betriebsart zum brennstoffgestuften Betrieb mit Flammenbildung gewechselt wird, bei der Brennstoff (13) in die Brennkammer (4) über die erste Brennstoffzuführung (9) geführt und innerhalb der Brennkammer (4) mit Brennluft (7) vermischt wird, wobei der Brennstoff (13) zumindest zum Teil in der Brennkammer (4) durch Reaktion mit der Brennluft (7) mit Flamme verbrannt wird und der aus der zweiten Brennstoffzuführung (11) austretende Brennstoff (13) mit dem mit Abgas vermischten Stoffstrom (22) im Heizraum (3) mit Flamme verbrannt wird.

11. Verfahren nach Anspruch 10, **dadurch gekennzeichnet, dass** bei Erreichen einer Temperatur im Heizraum (3), die oberhalb der Selbstzündtemperatur (T_{SZ}) des Brennstoffs (13) liegt, von der zweiten Betriebsart zum brennstoffgestuften Betrieb mit Flamme in eine dritte Betriebsart zum flammenlosen Betrieb des Industriebrenners gewechselt wird, bei der die Zufuhr von Brennstoff (13) in die Brennkammer (4) über die erste Brennstoffzuführung (9) gestoppt wird und nur noch Brennluft (7) als Stoffstrom (22) aus der Öffnung (5) der Brennkammer (4) in den Heizraum (3) geführt wird.

12. Verfahren nach Anspruch 9, **dadurch gekennzeichnet, dass** bei einer Temperatur im Heizraum (3), die oberhalb der Selbstzündtemperatur (T_{SZ}) des Brennstoffs (13) liegt, als Folgebetriebsart in eine Betriebsart zum flammenlosen Betrieb des Industriebrenners gewechselt wird, bei der die Zufuhr von Brennstoff (13) in die Brennkammer (4) über die erste Brennstoffzuführung (9) gestoppt wird und im Wesentlichen Brennluft (7) als Stoffstrom (22) aus der Öffnung (5) der Brennkammer (4) in den Heizraum (3) geführt wird.
